(19) Europäisches Patentamt / European Patent Office / Office européen des brevets

(11) **EP 2 627 996 B1**

(12) **FASCICULE DE BREVET EUROPEEN**

(45) Date de publication et mention
de la délivrance du brevet:
**09.07.2014 Bulletin 2014/28**

(51) Int Cl.:
***G01N 25/18*** (2006.01)

(21) Numéro de dépôt: **11831828.6**

(22) Date de dépôt: **11.10.2011**

(86) Numéro de dépôt international:
**PCT/FR2011/052367**

(87) Numéro de publication internationale:
**WO 2012/049417 (19.04.2012 Gazette 2012/16)**

(54) **DISPOSITIF ET METHODE DE DETERMINATION DE LA CONDUCTIVITE ET/OU DE LA CAPACITE THERMIQUE D'UNE PAROI.**

VORRICHTUNG UND VERFAHREN ZUR BESTIMMUNG DER WÄRMELEITFÄHIGKEIT UND/ODER DER WÄRMELEISTUNG EINER WAND

DEVICE AND METHOD FOR DETERMINING THE THERMAL CONDUCTIVITY AND/OR HEAT CAPACITY OF A WALL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2010 FR 1058266**

(43) Date de publication de la demande:
**21.08.2013 Bulletin 2013/34**

(73) Titulaire: **Institut Français des Sciences et Technologies des Transports, de l'Aménagement et des Réseaux 77420 Champs sur Marne (FR)**

(72) Inventeurs:
• **NASSIOPOULOS, Alexandre**
 **F-92120 Montrouge (FR)**
• **BOURQUIN, Frédéric**
 **F-94210 La Varenne SaintHilaire (FR)**

(74) Mandataire: **Intès, Didier Gérard André et al Cabinet Beau de Loménie 158, rue de l'Université 75340 Paris Cedex 07 (FR)**

(56) Documents cités:
**US-A- 5 940 784**

• CUCUMO M ET AL: "A method for the experimental evaluation in situ of the wall conductance", ENERGY AND BUILDINGS, LAUSANNE, CH, vol. 38, no. 3, 1 mars 2006 (2006-03-01), pages 238-244, XP025085279, ISSN: 0378-7788, DOI: DOI:10.1016/J.ENBUILD. 2005.06.005 [extrait le 2006-03-01]
• ZAWILSKI B M ET AL: "Dynamic measurement access, a new technique for fast thermal conductivity measurement", REVIEW OF SCIENTIFIC INSTRUMENTS, AIP, MELVILLE, NY, US, vol. 72, no. 10, 1 octobre 2001 (2001-10-01), pages 3937-3939, XP012038857, ISSN: 0034-6748, DOI: 10.1063/1.1400148
• LUO C ET AL: "Determining the thermal capacitance, conductivity and the convective heat transfer coefficient of a brick wall by annually monitored temperatures and total heat fluxes", ENERGY AND BUILDINGS, LAUSANNE, CH, vol. 43, no. 2-3, 7 octobre 2010 (2010-10-07), pages 379-385, XP027597602, ISSN: 0378-7788 [extrait le 2011-01-12]
• ZUKOWSKI M ET AL: "Experimental and numerical investigation of a hollow brick filled with perlite insulation", ENERGY AND BUILDINGS, LAUSANNE, CH, vol. 42, no. 9, 20 mars 2010 (2010-03-20), pages 1402-1408, XP027060495, ISSN: 0378-7788 [extrait le 2010-03-20]

**(Cont. page suivante)**

- PENG C ET AL: "In situ measuring and evaluating the thermal resistance of building construction", ENERGY AND BUILDINGS, LAUSANNE, CH, vol. 40, no. 11, 1 janvier 2008 (2008-01-01), pages 2076-2082, XP024523021, ISSN: 0378-7788, DOI: DOI:10.1016/J.ENBUILD.2008.05.012 [extrait le 2008-06-06]

**Description**

L'invention concerne la détermination de la conductivité k et/ou de la capacité thermique C d'une paroi plane, comme par exemple mais non exclusivement, une paroi de bâtiment. Dans la construction, la connaissance de l'un et/ou l'autre de ces deux paramètres est essentielle dans la mesure où elle permet de calculer de manière précise les déperditions thermiques susceptibles de se produire à travers la paroi étudiée. Une telle étude peut alors être exploitée pour définir une stratégie de rénovation du bâtiment visant à réduire la consommation énergétique nécessaire pour le chauffer. Rappelons l'importance des enjeux énergétiques liés au chauffage des bâtiments : En France, le parc de bâtiments est responsable de 40 % des consommations d'énergie.

Dans ce document, la capacité thermique C (en J.K$^{-1}$) désigne la quantité de chaleur que peut emmagasiner la paroi considérée ; elle est également égale au produit entre la masse volumique et la chaleur massique. Une paroi dont la capacité thermique est élevée est souvent qualifiée de paroi d'inertie importante ou « paroi lourde ».

Par ailleurs, la conductivité k de la paroi (en W.m$^{-1}$.K$^{-1}$) est égale à la quantité de chaleur transférée par unité de surface et par unité de temps sous un gradient de température de 1°C par mètre. En outre, le flux thermique surfacique sur chacune des faces de la paroi est contrôlé par la conductivité de la paroi, le flux thermique surfacique étant la quantité de chaleur par unité de temps et par unité de surface (en W.m$^{-2}$) qu'échange une face de la paroi avec l'atmosphère ou les objets environnants. Il est égal à la variation du champ de température selon l'axe perpendiculaire à la paroi multipliée par la conductivité k.

METHODES ACTUELLES

Les méthodes connues pour la détermination de la conductivité k et/ou de la capacité thermique C d'une paroi plane reposent sur l'observation de la réponse en température de la paroi suite à une sollicitation thermique. Cette sollicitation peut être imposée ou non. Cela permet donc de distinguer les méthodes dites actives, dans lesquelles une quantité de chaleur connue est communiquée à la paroi, des méthodes passives dans lesquelles la sollicitation provient de l'environnement extérieur et n'est pas contrôlée.

Une méthode bien connue des thermiciens est par exemple celle décrite par la norme 1994: ISO 9869:1994 (1994-08-01).

Les méthodes actives nécessitent une parfaite maîtrise des conditions environnementales et sont de ce fait difficilement applicables in situ.

Par ailleurs, une partie des méthodes de détermination des propriétés thermiques d'une paroi sont des méthodes dites 'en régime permanent'. Ces méthodes se caractérisent par la mesure simultanée d'un flux de chaleur traversant l'échantillon et d'une différence de température ; elles permettent de déterminer la conductivité k de la paroi mais sont insuffisantes pour déterminer sa capacité thermique C. Parmi ces méthodes figurent la méthode de la « plaque chaude gardée » ou la méthode du « fil chaud », couramment employées dans l'industrie. Y figure également l'essai normalisé « Hot Box », qui utilise une méthode active en régime permanent pour la détermination de la résistance d'une paroi, et est largement utilisé aujourd'hui comme méthode de certification des matériaux de construction. Ce dernier essai n'est cependant envisageable que dans des conditions expérimentales de laboratoire.

A contrario, la méthode Flash et ses variantes sont des méthodes de mesure en régime transitoire. Ces méthodes consistent à imposer un échange de chaleur variable (échelon, Dirac, sinusoïde, ...) sur l'une des faces et à observer la réponse sur l'autre face. Ces méthodes permettent d'obtenir les caractéristiques dynamiques de la paroi et notamment les coefficients k et C. Cependant, ces méthodes sont également difficilement utilisables pour des mesures sur site.

Une méthode de mesure de la conductivité thermique en régime transitoire, mais sur échantillon, est divulguée par le document de MM.ZAWILSKI B M ET AL: "Dynamic measurement access, a new technique for fast thermal conductivity measurement", REVIEW OF SCIENTIFIC INSTRUMENTS, AIP, vol. 72, no. 10, 1 octobre 2001 (2001-10-01), pages 3937-3939.

En outre, certaines méthodes permettant la détermination des coefficients C et k nécessitent de mesurer la température en différents points à l'intérieur même de la paroi. De telles méthodes, étant destructives, sont en général inenvisageables pour des mesures sur site.

Enfin, la publication 'A method for the experimental evaluation in situ of the wall conductance' de MM.Cucumo, De Rosa, Ferraro, Kaliaskatsos, Marinelli, publiée en 2005 présente une méthode de détermination de la conductivité d'une paroi à partir des mesures de deux capteurs de température placés sur les faces de la paroi, et d'un capteur de flux thermique placé sur l'une des faces.

Cependant, comme le reconnaissent implicitement les auteurs dans la discussion de leurs résultats, la précision de cette méthode dépend largement de la précision de la mesure du flux thermique reçu par la face de la paroi. L'incertitude habituelle des capteurs utilisés pour mesurés de tels flux étant, comme ils l'indiquent, de l'ordre de +/- 5%, on comprend que la méthode présentée ne présente qu'une précision assez faible pour la détermination de la conductivité k et/ou de la capacité thermique C d'une paroi.

Aussi, il n'existe actuellement aucun dispositif ni aucune méthode utilisable in situ, de mise en oeuvre simple qui permette de déterminer la conductivité k et/ou la capacité thermique C d'une paroi avec une précision relativement élevée.

Un premier objectif de l'invention est donc de proposer un dispositif d'identification de la conductivité k et/ou de la capacité thermique C d'une paroi plane s'étendant entre une première et une deuxième face, le dispositif comportant :

un premier capteur de température apte à être placé sur la première face pour acquérir des mesures de la température de celle-ci ;
un deuxième capteur de température apte à être placé sur la deuxième face pour acquérir des mesures de la température de celle-ci ;
un troisième capteur ;
un système d'acquisition de données, apte à acquérir périodiquement des mesures fournies par lesdits capteurs pendant un intervalle de temps; et
des moyens de traitement des données aptes à déterminer le coefficient de conductivité k et/ou la capacité thermique C de la paroi, sur la base au moins des informations fournies par lesdits capteurs, en l'absence de régulation de la température ou du flux thermique sur l'une ou l'autre des faces de la paroi ;
dispositif qui soit relativement précis, utilisable in situ, simple à mettre en oeuvre, et dont l'utilisation ne nécessite pas de porter atteinte à l'intégrité de la paroi.

Cet objectif est atteint grâce au fait que dans le dispositif, le troisième capteur est un capteur de température apte à fournir une mesure de la température ambiante au voisinage de la première face de la paroi.

On note tout d'abord qu'avantageusement, le dispositif permet de déterminer la conductivité k et/ou la capacité thermique C d'une paroi sans qu'il ne soit nécessaire de réguler la température d'un côté ou de l'autre de celle-ci. Grâce à cela le dispositif est facilement exploitable in situ.

Par 'régulation de la température ou du flux thermique', on désigne ici une action (ce qui indique donc implicitement les moyens aptes à réaliser celle-ci) permettant d'obtenir une évolution dans le temps prédéterminée de la température ou du flux thermique (en l'occurrence, sur une face de la paroi). Le chauffage de l'une et/ou de l'autre des faces de la paroi ne constitue donc pas en général une régulation de température ou du flux thermique de cette surface, dans la mesure où il ne permet d'obtenir sur cette surface ni un profil de température prédéterminé, ni un profil de flux thermique reçu prédéterminé (en particulier, car un flux thermique ambiant non maîtrisé, par exemple sous forme de rayonnement infra-rouge, s'ajoute quasiment toujours au flux thermique produit par la source de chauffage).

Cela étant, même si le dispositif selon l'invention permet de déterminer le coefficient de conductivité k et/ou la capacité thermique C sans régulation de la température, cela n'exclut pas cependant la mise en oeuvre du dispositif dans une application dans laquelle la température et/ou le flux thermique sur une face de la paroi est régulé.

On comprend par ailleurs que, pour que le dispositif produise un résultat pleinement satisfaisant, il est nécessaire que l'intervalle de temps soit suffisamment long pour que pendant celui-ci, la température varie sur l'une et/ou l'autre des faces de la paroi. Dans le dispositif selon l'invention en effet, les moyens de traitement des données sont aptes à déterminer le coefficient de conductivité k et/ou la capacité thermique C de la paroi, sur la base d'informations fournies par les capteurs qui retracent une évolution des températures (de surface et au voisinage d'une surface) de la paroi, et non sur la base d'informations reflétant seulement un régime stationnaire, ou encore d'informations seulement de températures moyennes. Par conséquent, dans un régime de température stationnaire, établi, un dispositif selon l'invention ne permet pas en général de déterminer les coefficients k et/ou C.

L'avantage de l'invention est qu'elle ne nécessite que trois mesures différentes pour la détermination du coefficient k et/ou C : les températures sur les deux faces de la paroi, ainsi que la température ambiante du côté de la première face (température au voisinage de la première face). La température ambiante au voisinage de la deuxième face de la paroi, ou le flux thermique surfacique échangé par la première ou la deuxième face, peuvent cependant être mesurés en complément, afin d'augmenter la précision ou la fiabilité de la détermination du coefficient k et/ou C. Dans le cas de parois de bâtiments, en considérant que la première face correspond à la face intérieure, il suffit donc par exemple que le troisième capteur mesure la température intérieure, ce qui est en général particulièrement facile.

Comme on peut le constater, les mesures prévues selon l'invention restent simples à réaliser. En outre, ces mesures ne sont pas destructives et ne nécessitent pas la mesure de température à l'intérieur même de la paroi.

Dans un mode de réalisation, le dispositif ne comprend pas de capteur de flux thermique. Les capteurs que comprend le dispositif peuvent ainsi tous être, par exemple, des capteurs de température (ambiante ou de surface).

En ce qui concerne le matériel nécessaire pour la mise en oeuvre de l'invention, avantageusement, celui-ci est relativement simple et courant : les premiers et deuxièmes capteurs peuvent être des capteurs de température usuels. Le premier et/ou le deuxième capteur peuvent ainsi fonctionner par mesure du rayonnement infrarouge, ou encore être des thermocouples, des thermistances, etc.

Les moyens de traitement sont en général un ordinateur qui exécute un programme qui exploite les mesures fournies par les capteurs grâce au système d'acquisition de données. Ces moyens de traitement peuvent opérer de différentes manières.

Dans un mode de réalisation, les moyens de traitement déterminent le coefficient de conductivité k et/ou la capacité thermique C, en calculant l'évolution des températures dans la paroi pendant ledit intervalle de temps, et en retenant pour le coefficient de conductivité k et/ou la capacité thermique C, la ou les valeurs pour lesquelles, durant ledit intervalle, les différences entre les valeurs de température calculées pour les première et deuxième faces et les températures mesurées respectivement par les premier et deuxième capteurs sont minimales. Dans ce calcul, l'évolution des températures dans la paroi pendant l'intervalle de temps est calculée à partir notamment des mesures fournies par le troisième capteur.

Ainsi lors de cette opération de minimisation, le coefficient de conductivité k et/ou la capacité thermique C sont déterminés de manière à faire coïncider les températures calculées et mesurées sur les deux faces de la paroi. Dans un mode de réalisation préféré de l'invention, pour déterminer les valeurs minimales des différences entre les températures calculées et mesurées sur les deux faces de la paroi, les moyens de traitement exécutent un programme informatique qui minimise un critère d'erreur. Dans ce programme, en général, la détermination du coefficient de conductivité k et/ou de la capacité thermique C est faite via un algorithme itératif qui permet de minimiser le critère d'erreur.

Dans un mode de réalisation particulièrement avantageux, les moyens de traitement sont aptes à déterminer le coefficient de conductivité k et/ou la capacité thermique C seulement sur le fondement des mesures desdits premier, deuxième et troisième capteurs, au moins dans un mode de fonctionnement et/ou au moins dans une phase finale de calcul.

Dans le premier cas, le dispositif permet de déterminer k et/ou C avec seulement les mesures des trois capteurs au moins dans un mode de fonctionnement. Cela signifie que le dispositif peut notamment présenter un autre mode de fonctionnement, dans lequel les mesures de plus de trois capteurs sont utilisées pour déterminer le coefficient k et/ou C.

Le dispositif présente cependant au moins un mode dans lequel ce(s) coefficient(s) sont calculés en exploitant seulement les mesures provenant du premier, deuxième et troisième capteurs. On sélectionne ce mode de fonctionnement, et par conséquent on ne raccorde que trois capteurs, que lorsque les conditions d'environnement thermique de la paroi (sa température, les flux thermiques qu'elle reçoit) le permettent. Ce mode de fonctionnement est donc choisi pour certaines conditions spécifiques de température et de flux thermique échangé par la paroi.

Pour assurer la qualité de la détermination du coefficient k et/ou C, en particulier s'il y a un doute sur le fait que ces conditions soient réunies, le dispositif peut comporter en outre un indicateur qui fournit un indice de validité de la valeur du coefficient k et/ou C fournie par le dispositif. Le mode de fonctionnement avec seulement trois capteurs n'est alors pas utilisé si l'indice de validité renvoyé par l'indicateur prend une valeur insuffisante.

Dans un autre mode de réalisation, c'est seulement dans une phase finale de calcul ou de détermination du coefficient k et/ou C que seules les mesures provenant des premier, deuxième et troisième capteurs sont utilisées. Dans ce cas, indépendamment des conditions de température et de flux thermique échangé par la paroi, le dispositif peut être prévu pour fonctionner avec trois capteurs ou plus dans une première phase de calcul ou de fonctionnement (permettant par exemple de déterminer un profil approché des températures dans la paroi), puis pour fonctionner en utilisant seulement les données fournies par les trois capteurs dans la phase de détermination du coefficient k et/ou C. Ainsi, la valeur exacte renvoyée par le dispositif du coefficient k et/ou C ne dépend pas des mesures fournies par le ou les capteurs autres que les premier, deuxième et troisième capteurs.

En particulier, dans un mode de réalisation, les moyens de traitement sont aptes à exécuter :

- une phase d'initialisation durant laquelle des valeurs approchées des températures dans la paroi pendant ledit intervalle de temps sont calculées ;
- une phase de calcul durant laquelle le coefficient de conductivité k et/ou la capacité thermique C sont calculés, seules étant utilisées dans cette phase les mesures acquises par lesdits premier, deuxième et troisième capteurs.

La phase d'initialisation est alors celle au cours de laquelle, pour la première fois, de premières valeurs approchées des températures dans la paroi sont calculées, les paramètres k et/ou C n'étant pas modifiés pendant cette phase. Ce calcul prend en compte les différentes mesures fournies par les capteurs, et en particulier la mesure de température au voisinage de la première face de la paroi.

Ensuite, au cours d'une deuxième phase dite de calcul, les moyens de traitement exécutent une partie du programme qui vise à identifier les valeurs minimales des différences entre les températures mesurées et calculées, sur les deux faces. C'est pendant cette phase que les valeurs précises des grandeurs k et C sont calculées. Avantageusement, pour cette deuxième phase, seules sont utilisées les mesures provenant des trois capteurs, à l'exclusion de toute mesure fournies par un ou plusieurs autres capteurs.

Dans un mode de réalisation, l'architecture du programme exécuté pour déterminer le coefficient de conductivité k et/ou la capacité thermique C, est la suivante : Pour déterminer le coefficient de conductivité k et/ou la capacité thermique C, les moyens de traitement comportent

- un module de simulation, apte à calculer les valeurs de température de la paroi pendant ledit intervalle de temps, en fonction notamment de la conductivité (k) et/ou de la capacité thermique (C) de la paroi ; et
- un module d'adaptation, apte à déterminer une ou des valeurs modifiée(s) d'au moins une variable d'entrée du module de simulation, dont notamment le coefficient de conductivité k et/ou la capacité thermique C, de manière à réduire ou minimiser des différences entre les valeurs de température calculées pour les première et deuxième faces et les températures mesurées respectivement par les premier et deuxième capteurs.

Le module de simulation peut également calculer les valeurs de température de la paroi en prenant en compte comme paramètre, entre autres, le flux thermique surfacique (noté ΦL) sur la deuxième face de celle-ci.

Le module d'adaptation est une partie de programme qui vise à modifier, en général en plusieurs étapes de manière itérative, les valeurs des paramètres utilisés par le module de simulation pour calculer les températures dans la paroi. Ces modifications sont réalisées de manière à réduire ou à minimiser la valeur du critère d'erreur.

Les variables que le module d'adaptation est apte à modifier comprennent de préférence la conductivité (k) et/ou la capacité thermique (C) de la paroi, et éventuellement un ou plusieurs des paramètres suivants : flux thermique surfacique de la deuxième face, champ initial de température dans la paroi, et un ou des coefficient(s) d'échange thermique liant le flux thermique surfacique de la première et/ou la deuxième face à la température à l'intérieur ou en surface de la paroi.

De nombreux algorithmes peuvent être utilisés pour la minimisation du critère d'erreur. Il est possible par exemple d'utiliser l'algorithme de Levenberg-Marquardt. Dans un mode de réalisation, à chaque itération, le module de simulation détermine les valeurs de la température dans la paroi ; puis le module d'adaptation détermine la ou les valeur(s) modifiée(s) de ladite ou desdites variable(s) modifiée(s), qui minimisent ou du moins réduisent la valeur du critère d'erreur.

Différents modes de réalisation de l'invention envisageables se distinguent par la manière dont le flux thermique surfacique, sur la première et/ou la deuxième face de la paroi, est mesuré et/ou exploité.

Dans un mode de réalisation, le dispositif comprend en outre un quatrième capteur apte à être disposé au voisinage de ladite deuxième face pour fournir des valeurs approchées de la température de la deuxième face ou du flux surfacique échangé par ladite deuxième face.

Ce quatrième capteur peut notamment être exploité de telle sorte que des valeurs approchées des températures dans la paroi soient calculées à partir notamment de la température ou du flux thermique surfacique mesuré(e) par ce quatrième capteur. Grâce à cette estimation du flux thermique surfacique échangé par la deuxième face, le calcul des valeurs de température dans la paroi (notamment celui effectué dans une phase d'initialisation) est plus rapide et plus précis.

Cela étant, que sa valeur soit ou non mesurée (ou estimée à l'aide de mesures provenant d'un capteur), la valeur du flux thermique surfacique de la deuxième face peut être déterminée par les moyens de traitement dans certains modes de réalisation. Pour cela, les moyens de traitement peuvent avoir recours à l'équation suivante :

$$(S3) \qquad k\frac{\partial\theta(L,t)}{\partial x} + \alpha_L\theta(L,t) = \Phi_L(t) \qquad [0,T]$$

dans laquelle αL est un coefficient d'échange thermique de la deuxième face et ΦL est le flux thermique surfacique de la deuxième face.

Dans le programme informatique exécuté par les moyens de traitement, les mesures fournies par le troisième capteur servent à prendre en compte les échanges thermiques réalisés par la première face de la paroi. Dans un mode de réalisation, les moyens de traitement calculent les valeurs de température dans la paroi en prenant en compte l'équation suivante relative aux échanges thermiques sur la première face :

$$(S2) \qquad -k\frac{\partial\theta(0,t)}{\partial x} + \alpha_0\theta(0,t) = \alpha_0 T(t) \qquad [0,T]$$

dans laquelle :

α0 est un coefficient d'échange thermique ;

Φ0, qui est égal au produit α0 x T(t), est le flux thermique surfacique, de la première face ; et

T(t) est la température mesurée par le troisième capteur, exprimée en fonction du temps.

Une contrainte à prendre en compte lors de la réalisation des mesures tient au fait que celles-ci doivent être faites pendant un intervalle de temps durant lequel se produit une variation de température. Bien souvent, il n'est pas nécessaire d'utiliser une source de chaleur contrôlée ; le dispositif ou la méthode selon l'invention peut être mis(e) en oeuvre en exploitant les variations de température affectant naturellement la paroi au cours du temps. Cependant, pour gagner du temps il peut être préférable d'utiliser une source de chaleur.

Dans ce cas, le dispositif comporte en outre au moins une source de chaleur, apte à être disposée en regard d'une face de ladite paroi et à solliciter celle-ci par convection ou par rayonnement, modifiant ainsi le flux thermique surfacique de cette face. Il s'agit ici d'une source de chaleur dont on peut régler la position, et dans une certaine mesure la puissance rayonnée ; par exemple, un convecteur électrique. La source de chaleur est utilisée en général pour provoquer une soudaine élévation de température sur un côté de la paroi. La réaction de la paroi suite à ce changement permet alors de déterminer relativement rapidement les valeurs du coefficient de conductivité k et/ou de la capacité thermique C.

Un deuxième objectif de l'invention est de proposer une méthode de détermination de la conductivité k et/ou de la capacité thermique C d'une paroi plane s'étendant entre une première et une deuxième face, méthode qui soit utilisable in situ, qui soit simple à mettre en oeuvre, et ne nécessite pas de porter atteinte à l'intégrité de la paroi.

Cet objectif est atteint grâce au fait que la méthode la méthode comporte les étapes suivantes :

a) on dispose :

- sur une première face de la paroi, un premier capteur de température, afin d'acquérir des mesures de la température de ladite première face ;
- sur une deuxième face de la paroi, un deuxième capteur de température, afin d'acquérir des mesures de la température de ladite deuxième face ;
- un troisième capteur de température, pour fournir une mesure de la température ambiante au voisinage de la première face ;

b) pendant un intervalle de temps, on acquiert périodiquement les températures des première et deuxième faces de la paroi, ainsi que les températures mesurées par le troisième capteur, sans réguler la température ou le flux thermique surfacique sur aucune des faces de la paroi ; puis,

c) on détermine le coefficient de conductivité k et/ou la capacité thermique C sur la base au moins des informations fournies par lesdits capteurs.

Sauf mention contraire, les différents perfectionnements du dispositif d'identification présenté précédemment peuvent être transposés ou appliqués à la méthode indiquée ci-dessus. Ainsi par exemple, avantageusement la méthode peut être mise en oeuvre sans capteur de flux thermique.

Dans un mode de réalisation, pendant l'étape c), on calcule les températures dans la paroi pendant ledit intervalle de temps, à partir notamment des mesures fournies par ledit troisième capteur pendant ledit intervalle ; et on retient pour le coefficient de conductivité k et/ou la capacité thermique C, la valeur pour laquelle ou les valeurs pour lesquelles, durant ledit intervalle, les différences entre les valeurs de température calculées pour les première et deuxième faces et les températures mesurées respectivement par les premier et deuxième capteurs sont minimales.

Dans un mode de réalisation, à l'étape c), on détermine le coefficient de conductivité k et/ou la capacité thermique C seulement sur le fondement des mesures desdits premier, deuxième et troisième capteurs. Ce mode de mise en oeuvre peut ne concerner que certains modes de mise en oeuvre et/ou seulement une phase de calcul finale de l'étape c).

Dans ce cas, avantageusement l'étape c) peut comporter :

c1) une phase d'initialisation pendant laquelle on détermine des valeurs approchées des températures dans la paroi pendant ledit intervalle ; puis

c2) une phase de calcul durant laquelle on détermine le coefficient de conductivité k et/ou la capacité thermique C, seules étant utilisées dans ce calcul les mesures acquises par lesdits premier, deuxième et troisième capteurs.

Par ailleurs, la détermination du coefficient k et/ou C peut être optimisée en limitant ou en aménageant les échanges thermiques de la paroi pendant l'intervalle de mesure.

Ainsi dans un mode de réalisation, pendant l'intervalle de temps de mesures, la première face de la paroi est protégée des rayonnements thermiques par un écran opaque aux radiations.

Pour des raisons analogues, lorsque les variations de température naturellement causées par l'environnement de la paroi (soleil, etc...) sont suffisamment rapides, dans un mode de réalisation, pendant l'intervalle de temps des mesures, la paroi n'est pas soumise à l'action d'une source de chaleur contrôlée. La mise en oeuvre de la méthode est dans ce cas particulièrement simple.

A l'inverse dans un autre mode de réalisation, durant au moins une partie dudit intervalle de temps et/ou pendant une période précédant ledit intervalle, on dispose une source de chaleur contrôlée, en regard d'une face de ladite paroi pour modifier le flux thermique surfacique de cette face. Cet apport thermique permet de réduire la durée de l'intervalle de temps nécessaire aux mesures.

Dans un mode de réalisation, pendant au moins une partie de l'intervalle de temps, le flux thermique surfacique sur la deuxième face de la paroi est mesuré au moyen d'un capteur de flux thermique.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :

- la figure 1A est une coupe d'une paroi faisant apparaître la position des capteurs d'un premier dispositif selon l'invention ;
- les figures 1B et 1C sont des coupes d'une paroi, représentées respectivement perpendiculairement à l'axe de la paroi (fig.1B) et en perspective (fig.1C), et faisant apparaître la position des capteurs d'un deuxième dispositif selon l'invention ;
- les figures 2 et 3 sont des représentations schématiques montrant deux dispositifs selon l'invention, dans deux modes de réalisation différents ;
- la figure 4 est une coupe respectivement d'une paroi homogène et d'une paroi multicouche ;
- la figure 5 est un diagramme montrant une comparaison entre deux courbes d'évolution du flux de température en fonction du temps, sur la deuxième face de la paroi : la première représentant l'évolution réelle du flux, et la deuxième représentant l'évolution du flux telle qu'estimée grâce à l'invention ;
- les figures 6 et 7 montrent la convergence des paramètres de conductivité thermique (k) et de capacité thermique (C), en fonction du nombre d'itérations de l'algorithme de minimisation ; et
- la figure 8 est un diagramme représentant de manière schématique le fonctionnement de l'algorithme mis en oeuvre dans les dispositifs de détermination présentés par les figures 1 à 3.

De manière générale, la détermination des paramètres k et C selon l'invention comporte trois phases : a) La mise en place du dispositif ; une phase b) d'acquisition des mesures, et une phase c) de traitement des mesures permettant la détermination du ou des coefficients cherchés. Ces différentes phases vont successivement être présentées.

Mise en place du dispositif de mesure

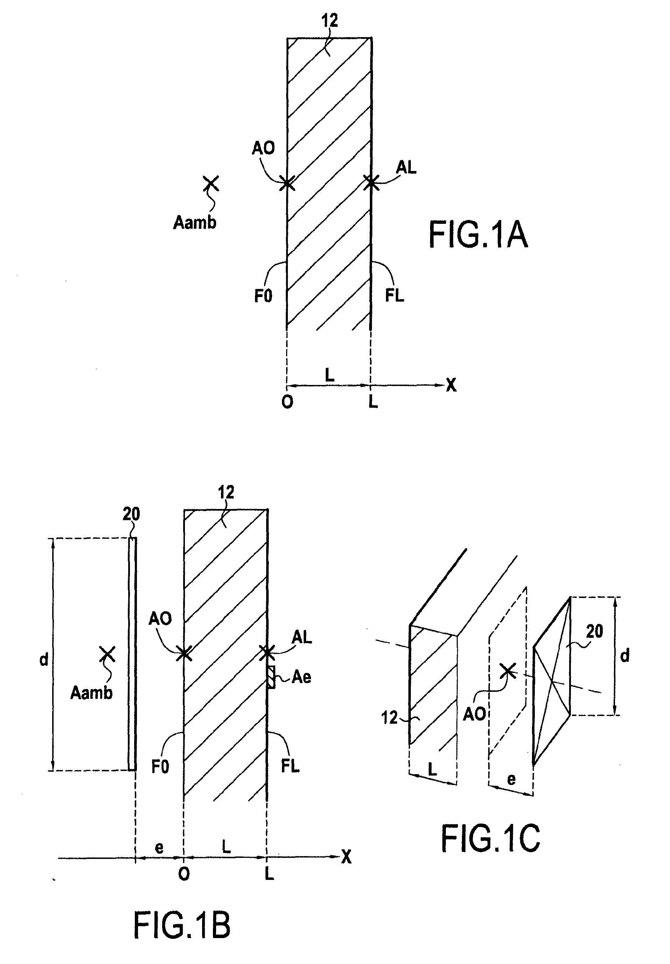

L'acquisition des mesures est réalisée au moyen de dispositifs de détermination de la conductivité k et/ou de la capacité thermique C d'une paroi. Ces dispositifs (référence 10) sont présentés dans différents modes de réalisation par les figures 1 (1A à 1C) à 4.

La figure 1 présente un dispositif 10 disposé sur une paroi 12, dans un premier mode de réalisation.

La paroi 12 est une paroi plane comme par exemple une paroi d'un bâtiment. Cette paroi s'étend entre une première face F0 et une deuxième face FL, qui s'étendent respectivement dans les plans (x=0) et (x=L).

Le dispositif 10 comporte trois capteurs :

- un premier capteur A0 de température placé sur la première face F0 de la paroi pour acquérir des mesures de la température ($\theta d1(t)$) de celle-ci ;
- un deuxième capteur AL de température placé sur la deuxième face FL de la paroi pour acquérir des mesures de la température ($\theta d2(t)$) de celle-ci ;
- un troisième capteur Aamb, disposé au voisinage de la première face de la paroi. Ce capteur Aamb est un capteur de température qui mesure la température ambiante.

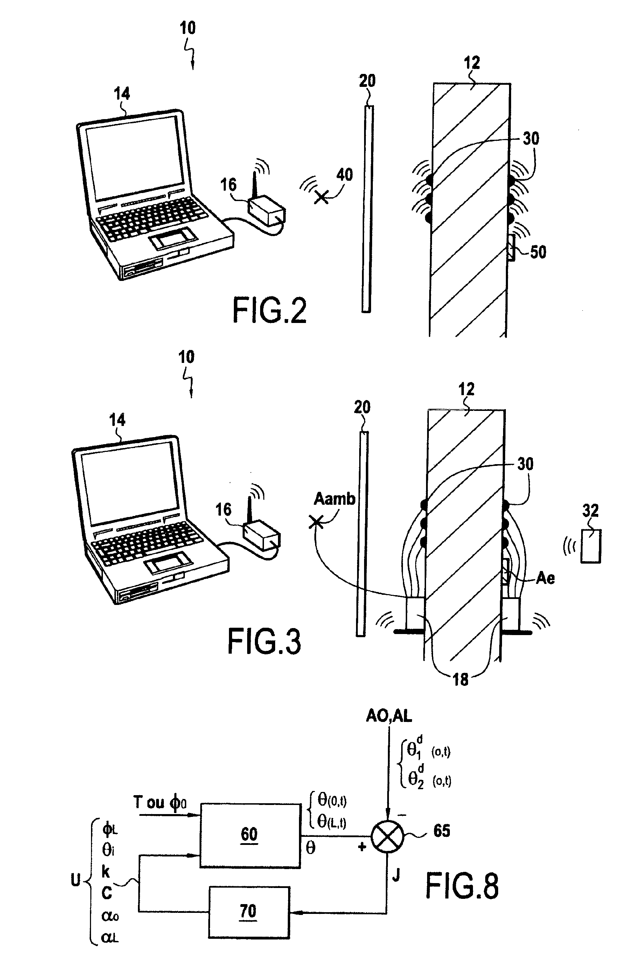

Chacun des trois capteurs indiqués précédemment peut être un capteur simple, fournissant directement sa propre mesure, ou peut être un ensemble de capteurs individuels 30, qui sont exploités ensemble de manière à fournir une mesure agrégée unique, obtenue à partir des mesures fournies par les capteurs individuels. En l'occurrence, le capteur A0 comme le capteur AL comporte trois capteurs individuels 30, comme cela est représenté sur les figures 2 et 3.

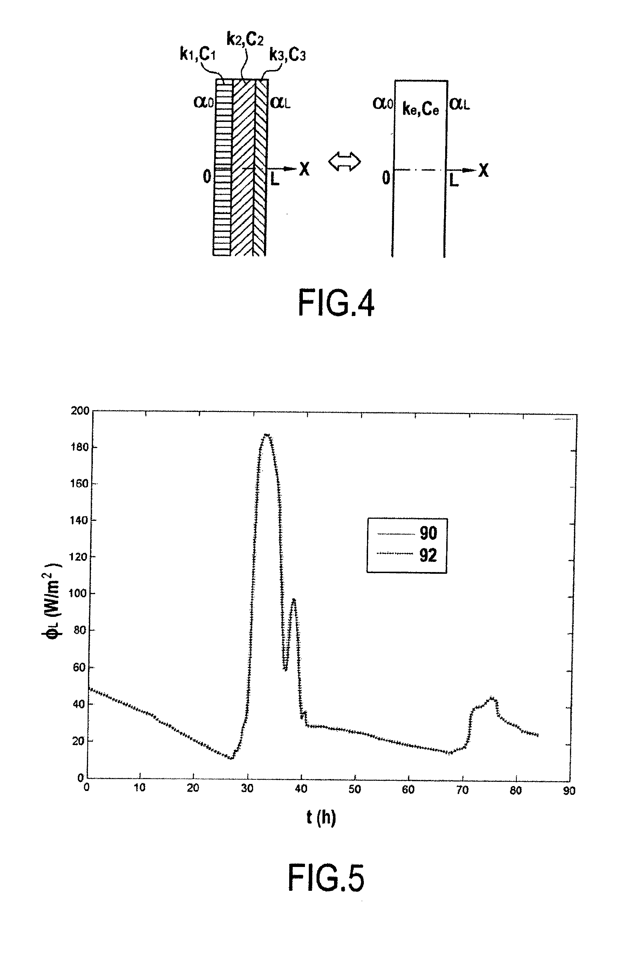

Le dispositif 10 comporte en outre un système 16 d'acquisition de données (fig.2,3), apte à acquérir périodiquement des mesures fournies par lesdits capteurs, et des moyens 14 de traitement des données ainsi acquises. Ces moyens de traitement comportent en général un ordinateur, par exemple de type PC et de préférence un PC portable, qui exécute un programme de traitement des données de mesure. Le système d'acquisition des données peut être une carte d'acquisition de données ou un système externe 16 comme représenté en figures 3 et 4.

Le PC 14 (en tant que moyen de traitement) permet d'exécuter le programme de traitement des données de mesure. Grâce à ce logiciel, le PC 14 permet de calculer l'évolution des températures ($\theta(x,t)$) dans la paroi, en fonction de la position (x) suivant l'axe perpendiculaire à la paroi et du temps (t), comme cela sera détaillé par la suite.

Dans un deuxième mode de réalisation (figures 1B et 1C), un dispositif 10 comporte en outre un capteur de flux thermique Ae, disposé au voisinage de la deuxième face de la paroi. Celui-ci est placé sur la paroi extérieure FL au voisinage du capteur de température AL, de manière à fournir une évaluation du flux thermique surfacique de la face externe FL.

Dans ce deuxième mode de réalisation, le dispositif 10 comporte de plus un écran 20 de protection contre les rayonnements incidents parasites. Celui-ci a la forme d'une plaque plane carrée, de dimensions environ d x d $m^2$, d étant la longueur du côté de l'écran 20. Pour que l'écran 20 apporte une protection satisfaisante, il convient qu'il soit opaque aux rayonnements, que sa face dirigée du côté de la paroi 12 soit non-émissive, qu'il soit positionné près de la paroi, et que sa dimension d soit nettement supérieure à l'épaisseur de la paroi. On peut avoir par exemple, d > 5L, et e < L (e étant la distance entre l'écran 20 et la paroi, et L étant l'épaisseur de la paroi).

Grâce à l'écran 20, opaque aux radiations, pendant la durée des mesures la première face de la paroi est protégée des rayonnements thermiques. Cela évite des apports de chaleur sous forme de rayonnement reçu par la première face, et permet de s'affranchir de l'utilisation d'un capteur de flux sur cette première face. Le flux thermique surfacique sur la première face peut ainsi être estimé simplement à partir de la température de surface et de la température ambiante, sur le premier côté de la paroi.

Les figures 2 et 3 présentent deux modes de réalisation du dispositif 10, présentant quelques différences qui vont être détaillées plus loin. Malgré ces différences, les mêmes références numériques sont attribuées aux éléments identiques ou similaires dans les deux modes de réalisation.

Une première différence réside dans le mode de transmission des mesures entre les capteurs A0, AL et le système d'acquisition de données 16. Dans le mode de réalisation de la figure 2, chacun des capteurs individuels 30 et 40 composant le capteur mis en oeuvre (A0, AL, Aamb) communique directement par voie hertzienne avec le système d'acquisition des données 16, relié pour sa part par câble au PC 16.

En revanche, dans le mode de réalisation de la figure 3, chacun des capteurs individuels composant les capteurs mis en oeuvre (A0, AL, Aamb) est relié par fil avec un boîtier de communication 18. Il y a donc deux boîtiers 18, chacun étant placé sur une face de la paroi et étant relié aux capteurs individuels disposés sur ou au voisinage de cette face de la paroi. Les boîtiers 18 communiquent par voie hertzienne avec le système d'acquisition des données 16, relié par câble au PC 16.

Une deuxième différence entre les modes de mise en oeuvre de l'invention correspondant aux figures 2 et 3 réside dans le fait que la méthode présentée par la figure 2 est une méthode passive, sans mise en place par l'opérateur d'une source de chaleur, alors que la méthode présentée par la figure 3 est active et suppose la mise en place par l'opérateur d'une source de chaleur 32.

Ainsi, dans le mode de mise en oeuvre de la figure 2, pendant la durée des mesures, la paroi n'est pas soumise à l'action d'une source de chaleur contrôlée. La chaleur reçue par la paroi est le résultat des fluctuations de température de l'air environnant les deux faces de la paroi et du rayonnement infrarouge reçu par la deuxième face de celle-ci. Inversement, dans le mode de mise en oeuvre de la figure 3, durant les mesures (ou juste avant, ou au début, des mesures), la source de chaleur 32 est placée en regard de la deuxième face de la paroi de manière à modifier le flux thermique surfacique reçu par cette face. Les mesures peuvent ainsi être effectuées plus rapidement que dans le cas précédent. Un délai d'une heure peut être suffisant. La source de chaleur peut être placée en regard d'une face ou l'autre de la paroi.

Acquisition des mesures

Une fois le dispositif en place, les mesures sont effectuées. Pendant un intervalle de temps on acquiert une série de mesures de températures à l'aide des capteurs A0, AL et Aamb, ainsi que des mesures du flux thermique sur la deuxième face, à l'aide du capteur Ae (ces mesures étant optionnelles). L'intervalle de temps choisi est suffisamment long pour que des variations significatives de sollicitations thermiques de la paroi aient lieu pendant celui-ci. Typiquement, un intervalle de 24 heures peut être choisi.

Une fois les mesures effectuées, l'étape c) de traitement des données est réalisée :

Traitement informatique des données

La figure 8 représente de manière simplifiée les traitements informatiques réalisés pour déterminer les coefficients k et/ou C. Ces traitements comportent deux modules principaux : un module de simulation 60 et un module d'adaptation 70.

Ces modules reposent sur une modélisation des phénomènes physiques mis en oeuvre, qui va d'abord être présentée :

Le module 60 de simulation numérique est fondé sur un modèle numérique de l'évolution des températures dans la paroi. Il permet de déterminer le champ de températures $\theta(x,t)$ dans la paroi, à partir de la mesure du troisième capteur Aamb et d'un vecteur U ($\Phi L(t)$, $\theta i(x)$, k, C, $\alpha 0$, $\alpha L$) de paramètres, fourni en entrée au module 60. Dans le mode de réalisation présenté, ce vecteur U comprend les paramètres suivants :,échange thermique de la deuxième face $\Phi L(t)$, champ initial de température $\theta i(x)$ dans la paroi, conductivité k et capacité thermique C de la paroi, et les coefficients d'échange thermique $\alpha 0$, $\theta L$ mis en oeuvre dans les équations d'échange thermique sur les deux faces, citées précédemment.

(On notera que dans un autre mode de réalisation, si au lieu de mesurer la température ambiante sur la première face, on mesurait le flux thermique surfacique reçu par la première face, alors, le vecteur U pourrait inclure en outre le flux thermique sur la première face $\Phi\theta(t)$).

Le modèle numérique mis en oeuvre repose sur une représentation simplifiée de la paroi :

On considère que la paroi est plane et présente des surfaces parallèles F0 et FL disposées dans les plans (x=0) et (x=L). On suppose que son épaisseur est faible par rapport aux deux autres dimensions, de telle sorte que les échanges thermiques à l'intérieur de la paroi ont lieu dans la direction X de l'épaisseur, perpendiculaire aux faces F0 et FL.

La première surface est en contact avec l'air à la température T(t) et échange de la chaleur par convection avec celui-ci. Selon le modèle numérique (et les capteurs) utilisé(s), on peut supposer que la première surface échange ou non de la chaleur sous forme de rayonnement. La chaleur échangée se traduit par un flux thermique surfacique $\Phi 0$.

La deuxième surface est en contact avec l'air et échange de la chaleur par convection avec celui-ci. Elle échange également de la chaleur sous forme de rayonnement avec l'environnement (soleil, bâtiments environnants, ciel, sol,...) ce qui se traduit par un flux thermique surfacique $\Phi L$.

Les échanges de chaleur ont lieu de manière dynamique entre chacune des deux surfaces et les environnements extérieur et intérieur.

Dans le mode de réalisation présenté, ces échanges sont pris en compte dans les calculs de la manière suivante :

Tout d'abord, en ce qui concerne la deuxième face, le flux thermique surfacique $\Phi L(t)$ échangé est utilisé comme paramètre pour la détermination du champ de température $\theta(x,t)$. Les contraintes quant aux échanges thermiques au niveau de la deuxième face sont prises en compte via l'équation citée précédemment :

$$(S3) \qquad k\frac{\partial\theta(L,t)}{\partial x} + \alpha_L\theta(L,t) = \Phi_L(t) \qquad [0,T]$$

Cette équation signifie que le flux thermique qui est échangé par la paroi en x=L (membre de gauche) est égal au flux thermique échangé avec l'extérieur ($\Phi L(t)$, membre de droite). Le cas échéant, après avoir déterminé l'évolution des températures dans la paroi, cette équation permet de calculer la valeur du flux thermique surfacique de la deuxième face.

D'autre part, en ce qui concerne la première face, le troisième capteur (Aamb) fournit des mesures de la température au voisinage de la première face. A l'aide des informations fournies par ce capteur, ainsi que par le capteur A0, les moyens de traitement prennent en compte l'échange thermique sur la première face et calculent les valeurs de température ($\theta(x,t)$) en prenant en compte l'équation suivante, citée précédemment :

$$(S2) \qquad -k\frac{\partial \theta(0,t)}{\partial x} + \alpha_0 \theta(0,t) = \alpha_0 T(t) \quad [0,T]$$

Par ailleurs, dans la détermination du modèle du champ de température ($\theta(x,t)$), un champ initial de température ($\theta i(x)$ dans la paroi à l'instant initial est utilisé comme paramètre.

En résumé, l'évolution de la température dans la paroi est modélisée par un système d'équations (1) aux dérivées partielles de type parabolique :

$$(1) \begin{cases} (S1) & C\dfrac{\partial \theta}{\partial t} - \dfrac{\partial}{\partial x} k \dfrac{\partial \theta}{\partial x} = 0 & [0,L] \times [0,T] \\[2em] (S2) & -k\dfrac{\partial \theta(0,t)}{\partial x} + \alpha_0 \theta(0,t) = \alpha_0 T(t) & [0,T] \\[2em] (S3) & k\dfrac{\partial \theta(L,t)}{\partial x} + \alpha_L \theta(L,t) = \Phi_L(t) & [0,T] \\[2em] (S4) & \theta(x,0) = \theta_i(x) & [0,L] \end{cases}$$

Dans ce modèle (1) :

La première équation (S1) dite équation de la chaleur régit l'évolution de la température ($\theta(x,t)$) à l'intérieur de la paroi. Cette évolution dépend essentiellement de la conductivité k et de la capacité thermique C de la paroi.

Les équations S2 et S3 correspondent aux conditions d'échange thermique sur les faces F0 et FL. L'équation S4 impose que le champ de température dans la paroi à l'instant initial t=0 des mesures, soit égal à un champ de température donné $\theta i(x)$.

D'autres formulations peuvent être adoptées notamment pour les équations S2 et S3. L'équation S3 présente un modèle d'échange de chaleur générique sur la paroi FL. En effet, le flux thermique surfacique échangé $\Phi_L(t)$ peut être absolument quelconque.

L'équation S2 présente un modèle d'échange de température simplifié sur la paroi F0, selon l'hypothèse que cette face ne reçoit pas de chaleur sous forme de rayonnement. A la place de l'équation S2, il serait possible pour la paroi F0 d'utiliser une équation similaire à l'équation S3, en remplaçant simplement les références à la paroi FL, par des références à la paroi F0.

De manière connue en soi, le système d'équations (1) est résolu grâce à une discrétisation des inconnues et des paramètres d'entrée et d'un algorithme d'intégration numérique, en supposant connu l'ensemble des paramètres inconnus U. La méthode des éléments finis ou la méthode des différences finies est utilisée pour l'approximation dans l'espace ce qui résulte à un système matriciel dépendant du temps. Le domaine temporel est discrétisé en pas de temps de longueur égale, et le champ de température est obtenu, pour chaque pas de temps, grâce à l'algorithme implicite d'Euler, en utilisant les valeurs du champ de température au pas de temps précédent.

Par ailleurs, dans un mode de réalisation non présenté, le modèle pourrait prendre en compte en outre deux équations supplémentaires, qui traduisent la contrainte d'égalité entre les température $\theta(0,t)$ et $\theta(L,t)$ telles que fournies par le modèle pour les deux surfaces de la paroi, et les températures $\theta^d 1(t)$, $\theta^d 2(t)$ effectivement mesurées sur l'une et l'autre de ces surfaces.

Dans le mode de réalisation présenté inversement, cette contrainte d'égalité entre les températures calculées et mesurées sur les deux faces de la paroi n'est pas prise en compte parmi les équations du système (S) comme une contrainte du modèle, à l'instar des équations S2 à S4. En effet, cette contrainte d'égalité est prise en compte par un critère d'erreur J, que la méthode vise à minimiser. Lorsque le minimum est atteint, la contrainte d'égalité est alors satisfaite ou quasiment satisfaite.

Après avoir présenté le modèle numérique sur lequel reposent les calculs effectués, l'algorithme mis en oeuvre à l'aide des modules 60 et 70 va maintenant être précisé :

> Le module de simulation numérique permet de calculer des valeurs du champ de température, à partir des variables du vecteur U et de la mesure fournie par le troisème capteur Aamb.
> Le programme de calcul est itératif. Lors de la première itération, des valeurs arbitraires par défaut sont utilisées comme vecteur U, et permettent un premier calcul des températures $\theta(x,t)$ dans la paroi.

Ce calcul du champ de température $\theta$ fournit en particulier les valeurs de température sur les deux faces, $\theta(0,t)$ et $\theta(L,t)$. Ces valeurs, ainsi que les mesures de températures $\theta^d 1(t)$, $\theta^d 2(t)$ sont fournies à un comparateur 65, qui détermine la valeur d'un critère d'erreur J. Ce critère d'erreur est donné par l'équation :

$$\mathrm{J} = \frac{1}{2}\sum_{j=1}^{2}\int_{0}^{T}\left(\theta(x_j,t)-\theta_j^d(t)\right)^2\,dt$$

dans laquelle on utilise la convention suivante : $x_1 = 0$ et $x_2 = L$.

Le critère J mesure l'écart entre les valeurs du modèle de température $\theta(0,t)$ et $\theta(L,t)$ respectivement sur les première et deuxième faces et les températures $\theta^d 1(t)$, $\theta^d 2(t)$ mesurées respectivement par les premier et deuxième capteurs.

La minimisation du critère J est faite en faisant varier les valeurs des différents paramètres du vecteur U, au moyen du module d'adaptation 70. Ce module permet de déterminer un nouveau jeu de valeurs des paramètres du vecteur U, de manière à réduire la valeur du critère d'erreur J, dans l'objectif de minimiser celui-ci. En sortie, le module d'adaptation 70 fournit ainsi de nouvelles valeurs pour les variables suivantes (ou seulement certaines d'entre elles, en fonction du mode de mise en oeuvre) : la conductivité (k) et/ou la capacité thermique (C) de la paroi, le flux thermique surfacique de la deuxième face ($\Phi L(t)$), le champ initial de température $\theta i(x)$ dans la paroi, et un ou des coefficients) $(\alpha 0, \alpha L)$ d'échange thermique liant le flux thermique surfacique de la première et la deuxième faces respectivement à la température en surface de la paroi.

Pour minimiser le critère J, les modules 60 et 70 de simulation numérique et d'adaptation sont mis en oeuvre en utilisant l'algorithme de Levenberg-Marquardt.

Le modèle présenté précédemment comporte à la fois une inconnue principale, le champ de température $\theta(x,t)$ dans la paroi, et un ensemble de paramètres inconnus, regroupés en un vecteur de paramètres U égal à $\{\Phi L(t), \theta i(x),$ k, C, $\alpha 0, \alpha L\}$. La méthode proposée permet de déterminer l'ensemble de ces inconnues, en déterminant des valeurs de $\theta(x,t)$ et de U qui font coïncider sensiblement les températures mesurées avec celles provenant de la simulation, c'est-à-dire les températures de surface calculées par le module de simulation 60. Avantageusement, cette détermination est réalisée simplement à partir des mesures de température $\theta^d 1(t)$, $\theta^d 2(t)$ sur les deux faces de la paroi, et de la mesure de la température de l'air dans le voisinage de la première face ou de la quantité de chaleur totale reçue par cette face.

La détermination des paramètres inconnus U est faite en utilisant un algorithme de minimisation itératif. Celui-ci consiste à chaque pas de temps à fixer une valeur pour l'ensemble des paramètres inconnus U, calculer la valeur du champ de température au niveau de chaque face résultant de cet ensemble de paramètres, et modifier en conséquence les valeurs de l'ensemble de paramètres U jusqu'à ce que la fonction J soit minimale. Le problème posé étant fortement non-linéaire, la méthode détaillée ici recourt à la linéarisation et notamment à l'algorithme de Levenberg-Marquardt. Cet algorithme apporte une vitesse de convergence plus élevée que d'autres algorithmes, tout en restant de complexité raisonnable. Plus précisément, le programme informatique est fondé principalement sur l'algorithme de Levenberg-Marquardt, et a recours à la méthode du gradient conjugué en tant que sous-processus.

Suivant cette méthode, à chaque itération n, ayant déterminé le champ de température $\theta(x,t)$ dans la paroi en fonction du temps pour le vecteur $U_n$ (Un désignant la valeur attribuée au vecteur U lors de l'itération n), on détermine le vecteur $U_{n+1}$ en minimisant un critère d'erreur linéarisé J'(U). Ce critère d'erreur linéarisé J' défini par linéarisation du critère J peut s'exprimer par l'équation (2) suivante :

$$(2) \qquad J'(u) = \frac{1}{2} \sum_{j=1}^{2} \int_{0}^{T} \left( \theta(x_j, t) + \delta\theta(x_j, t) - \theta_j^d(t) \right)^2 dt + \frac{\epsilon}{2} \| u - u_n \|_V^2$$

où $\delta\theta = \delta\theta(\delta U)$ est la solution du système (1) linéarisé autour d'un point $U_n = \{ \Phi L(t), \theta i(x), k_n, C_n, \alpha_{0,n}, \alpha_{L,n}, \}$.
(on note $\delta U = \{ \Phi L(t), \theta i(x), \delta k, \delta C, \delta\alpha 0, \delta\alpha L \}$).

Le dernier terme sur la droite dans l'équation (2) est un terme de régularisation de type Tikhonov autour du point de régularisation Un, et ε est un paramètre de valeur proche de zéro. ∥ . ∥ représente une mesure des valeurs de l'ensemble U, est peut être donné par la racine carrée de la somme des carrés des valeurs des paramètres, intégrés dans le domaine de définition si les paramètres sont des fonctions d'une variable.

D'autre part, $\delta\theta = \delta\theta(\delta U)$ est la solution du système (3) obtenu par linéarisation du système (1) et qui s'écrit :

$$(3) \quad \begin{cases} C_n \dfrac{\partial \delta\theta}{\partial t} - \dfrac{\partial}{\partial x} k_n \dfrac{\partial \delta\theta}{\partial x} = -(\delta C - C_n)\dfrac{\partial \delta\theta}{\partial t} + \dfrac{\partial}{\partial x}(\delta k - k_n)\dfrac{\partial \theta}{\partial x} \\[2mm] -k_n \dfrac{\partial \delta\theta(0)}{\partial x} + \alpha_{0,n}\delta\theta(0) = (\delta k - k_n)\dfrac{\partial \theta(0)}{\partial x} - (\delta\alpha_0 - \alpha_{0,n})(\theta(0) - T) \\[2mm] k_n \dfrac{\partial \delta\theta(L)}{\partial x} + \alpha_{L,n}\delta\theta(L) = -(\delta k - k_n)\dfrac{\partial \theta(L)}{\partial x} - (\delta\alpha_L - \alpha_{L,n})\theta(L) \\[1mm] \delta\theta(x, 0) = 0 \end{cases}$$

L'algorithme itératif consiste donc à procéder à un premier niveau d'itérations (suivies par une variable n). Lors de chacune de ces itérations, on détermine le champ de température $\theta(x,t)$ dans la paroi en fonction du temps pour le vecteur $U_n$, puis on détermine le vecteur $U_{n+1}$ qui minimise le critère d'erreur linéarisé $J'(U_n)$. Pour cette dernière opération de minimisation, qui fournit $U_{n+1}$, l'algorithme fait appel à un sous-processus de minimisation, lui-même itératif en fonction d'une variable I, et qui utilise la méthode du gradient conjugué. Ainsi dans ce mode de réalisation, la minimisation du critère d'erreur linéarisé est réalisée par une méthode de gradient conjugué.

Ce sous-processus nécessite de calculer à chaque itération (sur I) le gradient de la fonctionnelle J'(U). Ce gradient est calculé en calculant l'état adjoint p, solution du problème (4) suivant :

$$(4) \quad \begin{cases} -C\dfrac{\partial p}{\partial t} - \dfrac{\partial}{\partial x} k \dfrac{\partial p}{\partial x} = \displaystyle\sum_{j=1}^{2} \left( \theta(x_j, t) + \delta\theta(x_j, t) - \theta_j^d(t) \right) \delta_{x_j} \\[3mm] -k\dfrac{\partial p(0)}{\partial x} + \alpha_0 p(0) = 0 \\[3mm] k\dfrac{\partial p(L)}{\partial x} + \alpha_L p(L) = 0 \\[1mm] p(x, T) = 0 \end{cases}$$

où l'on note $\delta x_j$ la fonction Dirac qui vaut 1 en $x_j$ et 0 ailleurs. Dans l'algorithme de gradient conjugué, la fonction de descente est une fonction de $\theta$ et de p, notée $F(\theta,p)$.

Récapitulatif

Au final, l'algorithme de détermination simultanée du champ de température dans la paroi, et du vecteur de paramètres U, qui vaut { $\Phi L(t)$, $\theta i(x)$, k,C, $\alpha 0$, $\alpha L$}, est conduit de la manière suivante ($U_n^I$ désigne la valeur attribuée au vecteur U lors de l'itération n) :

- Initialisation : $U_0^1$
- Boucle sur n (algorithme de Levenberg-Marquardt) : A chaque itération (n>=1) :

   ○ Initialisation : I=0, $U_n^0=U_{n-1}^{I+1}$
   o Boucle sur I (algorithme du gradient conjugué) : A chaque itération (I>1) :

   ■ Calculer $\theta$, solution de (1) : on détermine le champ de température correspondant le mieux au vecteur $U_n$ courant ;
   ■ Calculer $\delta\theta$ solution de (3)
   ■ Calculer p solution de (4)
   ■ Calculer la direction de descente d = $F(\theta,p)$
   ■ Calculer le pas optimal $\rho$ tel que J'($U_n^I$+ $\rho$ d)= min $_r$ J'($Un^I$+ r d)
   ■ Mettre à jour les variables : $U_n^{I+1}=U_n^I$ +p d : on détermine le vecteur $U_n^{I+1}$ optimisé en fonction du champ de température déterminé précédemment ;
   ■ Si $\| U_n^{I+1} - U_n^I \|$ < e$_+$ e, alors arrêt de la boucle sur I

   ○ $U_{n+1}^0=U_n^{I+1}$
   ○ $U_{n+1}^0= U_n^{I+1}$

- Si $\| U_{n+1}^0 - U_n^0 \|$ < e, alors arrêt de la boucle sur n.

L'algorithme présente une robustesse élevée et une vitesse de convergence relativement élevée.

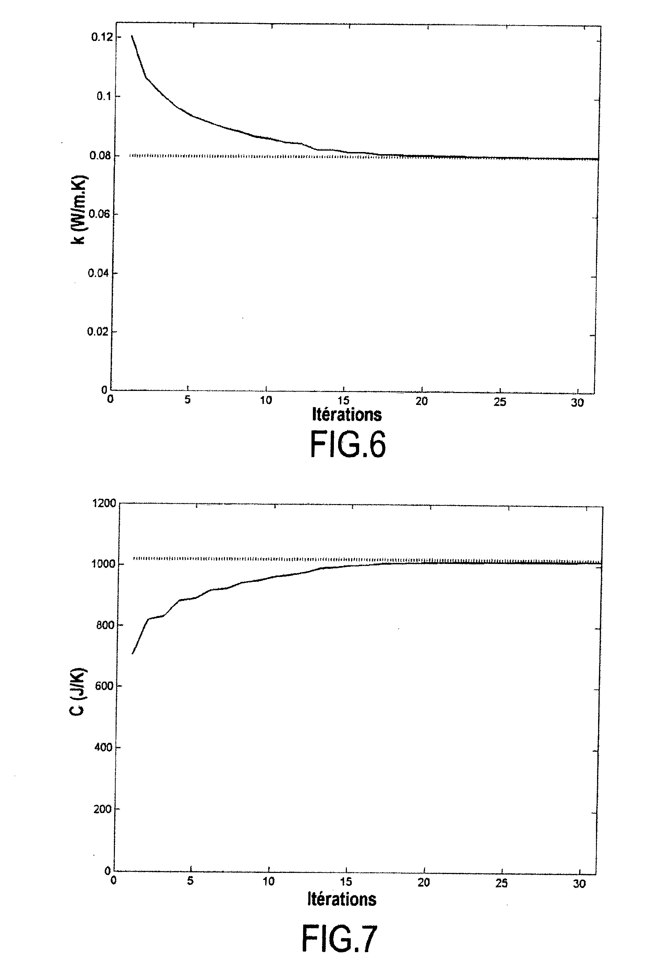

Les figures 6 et 7 montrent ainsi des résultats obtenus quant à la détermination des paramètres k et C. On constate que les valeurs sensiblement finales sont atteintes après seulement une trentaine d'itérations. En outre, numériquement les erreurs sont limitées à quelques dixièmes de pourcent, ce qui est amplement suffisant pour les applications envisagées dans le bâtiment.

Par ailleurs, la figure 5 montre une information additionnelle fournie par la méthode présentée : En effet, celle-ci permet de déterminer, en plus des coefficients k et C, le flux thermique surfacique $\Phi L$ de la deuxième face. On constate que les valeurs mesurées sont extrêmement proches des valeurs estimées : La courbe 90 représentant les valeurs réelles, et la courbe 92 représentant les valeurs estimées grâce à la méthode présentée, sont quasiment confondues.

Enfin, la figure 4 présente le cas particulier des parois multicouche : dans une paroi multicouche, chaque couche j de matériau présente des caractéristiques de conductivité thermique kj, et de capacité thermique Cj propres. Il est cependant possible de définir des caractéristiques équivalentes $k_{eq}$, $C_{eq}$ qui correspondent à une paroi de même épaisseur, dont le comportement thermique est globalement identique, en ce qui concerne les échanges thermiques des deux surfaces, à ceux de la paroi multicouche.

L'invention peut être appliquée à des parois multicouches ; elle permet alors de déterminer la conductivité thermique $k_{eq}$, et la capacité thermique $C_{eq}$ d'une paroi monocouche théorique, ayant les mêmes échanges thermiques que la paroi multicouche.

**Revendications**

1. Dispositif (10) de détermination la conductivité k et/ou de la capacité thermique C d'une paroi plane s'étendant entre une première (F0) et une deuxième (FL) face (x=0,x=L), le dispositif comportant :

   un premier capteur (A0) de température apte à être placé sur la première face pour acquérir des mesures de la température ($\theta^d1(t)$) de celle-ci ;
   un deuxième capteur (AL) de température apte à être placé sur la deuxième face pour acquérir des mesures de la température ($\theta^d2(t)$) de celle-ci ;
   un troisième capteur ;
   un système d'acquisition de données, apte à acquérir périodiquement des mesures fournies par lesdits capteurs pendant un intervalle de temps ; et

des moyens de traitement des données aptes à déterminer le coefficient de conductivité k et/ou la capacité thermique C de la paroi, sur la base au moins des informations fournies par lesdits capteurs, en l'absence de régulation de la température ou du flux thermique sur l'une ou l'autre des faces de la paroi ;

le dispositif **se caractérisant en ce que** le troisième capteur ($A_{amb}$) est un capteur de température apte à fournir une mesure de la température ambiante au voisinage de la première face de la paroi.

**2.** Dispositif selon la revendication 1, ne comprenant pas de capteur de flux thermique.

**3.** Dispositif selon la revendication 1 ou 2, dans lequel les moyens de traitement déterminent le coefficient de conductivité k et/ou la capacité thermique C, en calculant l'évolution des températures dans la paroi pendant ledit intervalle de temps, et en retenant pour le coefficient de conductivité k et/ou la capacité thermique C, la ou les valeurs pour lesquelles, durant ledit intervalle, les différences entre les valeurs de température ($\theta(0,t)$, $\theta(L,t)$) calculées pour les première et deuxième faces et les températures ($\theta d1(t)$, $\theta d2(t)$) mesurées respectivement par les premier et deuxième capteurs sont minimales.

**4.** Dispositif selon l'une quelconque des revendications 1 à 3, dans lequel les moyens de traitement sont aptes à déterminer le coefficient de conductivité k et/ou la capacité thermique C seulement sur le fondement des mesures desdits premier, deuxième et troisième capteurs, au moins dans un mode de fonctionnement et/ou au moins dans une phase finale de calcul.

**5.** Dispositif selon la revendication 4, dans lequel les moyens de traitement sont aptes à exécuter :

- une phase d'initialisation durant laquelle des valeurs approchées des températures dans la paroi pendant ledit intervalle de temps sont calculées ;
- une phase de calcul durant laquelle le coefficient de conductivité k et/ou la capacité thermique C sont calculés, seules étant utilisées dans cette phase les mesures acquises par lesdits premier, deuxième et troisième capteurs.

**6.** Dispositif selon l'une quelconque des revendications 1 à 5, dans lequel pour déterminer le coefficient de conductivité k et/ou la capacité thermique C, les moyens de traitement comportent

- un module de simulation, apte à calculer les valeurs de température de la paroi ($\theta(x,t)$) pendant ledit intervalle de temps, en fonction notamment de la conductivité (k) et/ou de la capacité thermique (C) de la paroi ; et
- un module d'adaptation, apte à déterminer une ou des valeurs modifiée(s) d'au moins une variable d'entrée du module de simulation, dont notamment le coefficient de conductivité k et/ou la capacité thermique C, de manière à réduire ou minimiser des différences entre les valeurs de température ($\theta(0,t)$, $\theta(L,t)$) calculées pour les première et deuxième faces et les températures ($\theta d1(t)$, $\theta d2(t)$) mesurées respectivement par les premier et deuxième capteurs.

**7.** Dispositif selon la revendication 6, dans lequel les variables que le module d'adaptation est apte à modifier comprennent la conductivité (k) et/ou la capacité thermique (C) de la paroi, et éventuellement un ou plusieurs des paramètres suivants : flux thermique surfacique de la deuxième face ($\Phi L(t)$), champ initial de température $\theta i(x)$ dans la paroi, et un ou des coefficient(s) ($\alpha0, \alpha L$) d'échange thermique liant le flux thermique surfacique de la première et/ou la deuxième face à la température à l'intérieur ou en surface de la paroi.

**8.** Dispositif selon l'une quelconque des revendications 1 à 7, comprenant en outre un quatrième capteur (Ae) apte à être disposé au voisinage de ladite deuxième face pour fournir des valeurs approchées de la température de la deuxième face ou du flux surfacique ($\Phi L$) échangé par ladite deuxième face.

**9.** Dispositif selon la revendication 8, dans lequel des valeurs approchées des températures dans la paroi sont calculées à partir notamment de la température ou du flux thermique surfacique ($\Phi L$) mesuré(e) par ledit quatrième capteur.

**10.** Dispositif selon l'une quelconque des revendications 1 à 9, comportant en outre au moins une source de chaleur (32), apte à être disposée en regard d'une face de ladite paroi et à solliciter celle-ci par convection ou par rayonnement, modifiant ainsi le flux thermique surfacique ($\Phi L$) de ladite face.

**11.** Méthode de détermination de la conductivité k et/ou de la capacité thermique C d'une paroi plane s'étendant entre une première (F0) et une deuxième (FL) face (x=0,x=L), la méthode comportant les étapes suivantes :

a) on dispose :

- sur une première face de la paroi, un premier capteur (A1) de température, afin d'acquérir des mesures de la température ($\theta$d1(t)) de ladite première face ;
- sur une deuxième face de la paroi, un deuxième capteur (A2) de température, afin d'acquérir des mesures de la température ($\theta$d2(t)) de ladite deuxième face ;
- un troisième capteur ($A_{amb}$) de température, pour fournir une mesure de la température ambiante au voisinage de la première face ;

b) pendant un intervalle de temps, on acquiert périodiquement les températures des première et deuxième faces de la paroi, ainsi que les températures mesurées par le troisième capteur, sans réguler la température ou le flux thermique surfacique sur aucune des faces de la paroi ; puis,

c) on détermine le coefficient de conductivité k et/ou la capacité thermique C sur la base au moins des informations fournies par lesdits capteurs.

12. Méthode selon la revendication 11, suivant laquelle pendant l'étape c), on calcule les températures dans la paroi pendant ledit intervalle de temps, à partir notamment des mesures fournies par ledit troisième capteur pendant ledit intervalle ; et on retient pour le coefficient de conductivité k et/ou la capacité thermique C, la valeur pour laquelle ou les valeurs pour lesquelles, durant ledit intervalle, les différences entre les valeurs de température ($\theta$(0,t), $\theta$(L,t)) calculées pour les première et deuxième faces et les températures ($\theta$d1(t), $\theta$d2(t)) mesurées respectivement par les premier et deuxième capteurs sont minimales.

13. Méthode selon la revendication 11 ou 12, dans laquelle à l'étape c), on détermine le coefficient de conductivité k et/ou la capacité thermique C seulement sur le fondement des mesures desdits premier, deuxième et troisième capteurs.

14. Méthode selon la revendication 13, dans laquelle l'étape c) comporte :

c1) une phase d'initialisation pendant laquelle on détermine des valeurs approchées des températures dans la paroi pendant ledit intervalle ; puis

c2) une phase de calcul durant laquelle on détermine le coefficient de conductivité k et/ou la capacité thermique C, seules étant utilisées dans ce calcul les mesures acquises par lesdits premier, deuxième et troisième capteurs.

15. Méthode selon l'une quelconque des revendications 11 à 14, dans laquelle pendant ledit intervalle de temps, la première face de la paroi est protégée des rayonnements thermiques par un écran opaque aux radiations.

16. Méthode selon l'une quelconque des revendications 11 à 15, dans laquelle pendant ledit intervalle de temps, la paroi n'est pas soumise à l'action d'une source de chaleur contrôlée.

17. Méthode selon l'une quelconque des revendications 11 à 15, dans laquelle durant au moins une partie dudit intervalle de temps et/ou pendant une période précédant ledit intervalle, on dispose une source de chaleur contrôlée, en regard d'une face de ladite paroi pour modifier le flux thermique surfacique de ladite face.

18. Méthode selon l'une quelconque des revendications 11 à 17, dans laquelle pendant au moins une partie dudit intervalle de temps, le flux thermique surfacique sur la deuxième face de la paroi est mesuré au moyen d'un capteur de flux thermique.

**Patentansprüche**

1. Vorrichtung (10) zur Bestimmung der Leitfähigkeit k und/oder der Wärmekapazität C einer ebenen Wand, die sich zwischen einer ersten (F0) und einer zweiten (FL) Seite (x=0, x=L) erstreckt, wobei die Vorrichtung umfasst:

einen ersten Temperaturfühler (A0), der geeignet ist, auf der ersten Seite platziert zu werden, um Messwerte der Temperatur ($\theta^d$1 (t)) dieser zu gewinnen,
einen zweiten Temperaturfühler (AL), der geeignet ist, auf der zweiten Seite platziert zu werden, um Messwerte der Temperatur ($\theta^d$2(t)) dieser zu gewinnen,
einen dritten Fühler,

ein Datenerfassungssystem, das geeignet ist, Messwerte, die durch die Fühler während einer Zeitspanne geliefert werden, periodisch zu erfassen, und

Mittel zur Verarbeitung der Daten, die geeignet sind, den Leitfähigkeitskoeffizienten k und/oder die Wärmekapazität C der Wand auf der Basis wenigstens der durch die Fühler gelieferten Informationen, ohne Regelung der Temperatur oder des Wärmeflusses auf der einen oder der anderen der Seiten der Wand zu bestimmen, wobei die Vorrichtung **dadurch gekennzeichnet ist, dass** der dritte Fühler ($A_{amb}$) ein Temperaturfühler ist, der geeignet ist, einen Messwert der Umgebungstemperatur in der Nähe der ersten Seite der Wand zu liefern.

2. Vorrichtung nach Anspruch 1, die keinen Wärmeflusssensor umfasst.

3. Vorrichtung nach Anspruch 1 oder 2, bei der die Verarbeitungsmittel den Leitfähigkeitskoeffizienten k und/oder die Wärmekapazität C dadurch bestimmen, dass die Entwicklung der Temperaturen in der Wand während der Zeitspanne berechnet wird und dass für den Leitfähigkeitskoeffizienten k und/oder die Wärmekapazität C der oder die Wert(e) berücksichtigt werden, bei denen während der Spanne die Differenzen zwischen den für die erste und die zweite Seite berechneten Temperaturwerten ($\theta(0,t)$, $\theta(L,t)$) und den durch den ersten bzw. den zweiten Fühler gemessenen Temperaturen ($\theta d1\,(t)$, $\theta d2(t)$) minimal sind.

4. Vorrichtung nach einem der Ansprüche 1 bis 3, bei der die Verarbeitungsmittel geeignet sind, den Leitfähigkeitskoeffizienten k und/oder die Wärmekapazität C lediglich auf der Grundlage der Messwerte der ersten, zweiten und dritten Fühler, wenigstens bei einer Funktionsweise und/oder wenigstens in einer Berechnungsendphase zu bestimmen.

5. Vorrichtung nach Anspruch 4, bei der die Verarbeitungsmittel geeignet sind, auszuführen:

- eine Initialisierungsphase, während derer Näherungswerte der Temperaturen in der Wand während der Zeitspanne berechnet werden,
- eine Berechnungsphase, während derer der Leitfähigkeitskoeffizient k und/oder die Wärmekapazität C berechnet werden, wobei in dieser Phase lediglich die durch die ersten, zweiten und dritten Fühler erfassten Messwerte verwendet werden.

6. Vorrichtung nach einem der Ansprüche 1 bis 5, bei der zur Bestimmung des Leitfähigkeitskoeffizienten k und/oder der Wärmekapazität C die Verarbeitungsmittel umfassen

- ein Simulationsmodul, das geeignet ist, die Temperaturwerte der Wand ($\theta(x,t)$) während der Zeitspanne in Abhängigkeit insbesondere von der Leitfähigkeit (k) und/oder der Wärmekapazität (C) der Wand zu berechnen, und
- ein Anpassungsmodul, das geeignet ist, einen modifizierten Wert oder modifizierte Werte von wenigstens einer Eingangsvariablen des Simulationsmoduls zu bestimmen, darunter insbesondere der Leitfähigkeitskoeffizient k und/oder die Wärmekapazität C, um Differenzen zwischen den für die erste und die zweite Seite berechneten Temperaturwerten ($\theta(0,t)$, $\theta(L,t)$) und den durch den ersten bzw. den zweiten Fühler gemessenen Temperaturen ($\theta d1(t)$, $\theta d2(t)$) zu verringern oder zu minimieren.

7. Vorrichtung nach Anspruch 6, bei der die Variablen, die das Anpassungsmodul zu modifizieren geeignet ist, die Leitfähigkeit (k) und/oder die Wärmekapazität (C) der Wand sowie eventuell einen oder mehrere der folgenden Parameter umfassen: flächenbezogener Wärmefluss der zweiten Seite ($\Phi L(t)$), Ausgangstemperaturfeld $\theta i(x)$ in der Wand und ein Wärmeaustauschkoeffizient oder -koeffizienten ($\alpha 0$, $\alpha L$), die den flächenbezogenen Wärmefluss der ersten und/oder zweiten Seite mit der Temperatur innerhalb oder auf der Oberfläche der Wand verbinden.

8. Vorrichtung nach einem der Ansprüche 1 bis 7, ferner umfassend einen vierten Fühler (Ae), der geeignet ist, in der Nähe der zweiten Seite angeordnet zu werden, um Näherungswerte der Temperatur der zweiten Seite oder des durch die zweite Seite ausgetauschten flächenbezogenen Flusses ($\Phi L$) zu liefern.

9. Vorrichtung nach Anspruch 8, bei der Näherungswerte der Temperaturen in der Wand anhand insbesondere der Temperatur oder des flächenbezogenen Wärmeflusses ($\Phi L$), die/der durch den vierten Fühler gemessen wird, berechnet werden.

10. Vorrichtung nach einem der Ansprüche 1 bis 9, ferner umfassend wenigstens eine Wärmequelle (32), die geeignet ist, gegenüber einer Seite der Wand angeordnet zu werden und diese durch Konvektion oder durch Strahlung zu beanspruchen, wodurch der flächenbezogene Wärmefluss ($\Phi$L) der Seite verändert wird.

11. Verfahren zur Bestimmung der Leitfähigkeit k und/oder der Wärmekapazität C einer ebenen Wand, die sich zwischen einer ersten (F0) und einer zweiten (FL) Seite (x=0, x=L) erstreckt, wobei das Verfahren die folgenden Schritte umfasst:

a) Anordnen:

- eines ersten Temperaturfühlers (A1) auf einer ersten Seite der Wand, um Messwerte der Temperatur ($\theta$d1 (t)) der ersten Seite zu gewinnen,
- eines zweiten Temperaturfühlers (A2) auf einer zweiten Seite der Wand, um Messwerte der Temperatur ($\theta$d2(t)) der zweiten Seite zu gewinnen,
- einen dritten Temperaturfühler ($A_{amb}$), um einen Messwert der Umgebungstemperatur in der Nähe der ersten Seite zu liefern,

b) während einer Zeitspanne periodisches Erfassen der Temperaturen der ersten und der zweiten Seite der Wand sowie der durch den dritten Fühler gemessenen Temperaturen, ohne die Temperatur oder den flächenbezogenen Wärmefluss auf keiner der Seiten der Wand zu regeln, dann

c) Bestimmen des Leitfähigkeitskoeffizienten k und/oder der Wärmekapazität C auf der Basis wenigstens der durch die Fühler gelieferten Informationen.

12. Verfahren nach Anspruch 11, wonach während des Schrittes c) die Temperaturen in der Wand während der Zeitspanne anhand insbesondere der durch den dritten Fühler während der Spanne gelieferten Informationen berechnet werden, und für den Leitfähigkeitskoeffizienten k und/oder die Wärmekapazität C der Wert oder die Werte berücksichtigt wird/werden, bei dem oder denen während der Spanne die Differenzen zwischen den für die erste und die zweite Seite berechneten Temperaturwerten ($\theta$(0,t), $\theta$(L,t)) und den durch den ersten bzw. den zweiten Fühler gemessenen Temperaturen ($\theta$d1 (t), $\theta$d2(t)) minimal sind.

13. Verfahren nach Anspruch 11 oder 12, bei dem bei Schritt c) der Leitfähigkeitskoeffizient k und/oder die Wärmekapazität C lediglich auf der Grundlage der Messwerte der ersten, zweiten und dritten Fühler bestimmt werden.

14. Verfahren nach Anspruch 13, bei dem Schritt c) umfasst:

c1) eine Initialisierungsphase, während derer Näherungswerte der Temperaturen in der Wand während der Spanne bestimmt werden, anschließend

c2) eine Berechnungsphase, während derer der Leitfähigkeitskoeffizient k und/oder die Wärmekapazität C bestimmt werden, wobei bei dieser Berechnung lediglich die durch die ersten, zweiten und dritten Fühler erfassten Messwerte verwendet werden.

15. Verfahren nach einem der Ansprüche 11 bis 14, bei dem während der Zeitspanne die erste Seite der Wand vor den Wärmestrahlungen durch einen strahlenundurchlässigen Schirm geschützt ist.

16. Verfahren nach einem der Ansprüche 11 bis 15, bei dem während der Zeitspanne die Wand nicht der Wirkung einer kontrollierten Wärmequelle ausgesetzt ist.

17. Verfahren nach einem der Ansprüche 11 bis 15, bei dem während wenigstens eines Teils der Zeitspanne und/oder während eines der Spanne vorausgehenden Zeitraums eine kontrollierte Wärmequelle gegenüber einer Seite der Wand angeordnet wird, um den flächenbezogenen Wärmefluss der Seite zu verändern.

18. Verfahren nach einem der Ansprüche 11 bis 17, bei dem während wenigstens eines Teils der Zeitspanne der flächenbezogene Wärmefluss auf der zweiten Seite der Wand mittels eines Wärmeflusssensors gemessen wird.

**Claims**

1. A device (10) for determining the conductivity k and/or the heat capacity C of a planar wall extending between a first (F0) and second (FL) face (x=0, x=L), the device including:

a first temperature sensor (A0) capable of being placed on the first face in order to acquire measurements of the temperature ($\theta^d1(t)$) of the latter;

a second temperature sensor (AL) capable of being placed on the second face in order to acquire measurements of the temperature ($\theta^d2(t)$) of the latter;

a third sensor;

a data acquisition system, capable of periodically acquiring measurements provided by said sensors for a time interval; and

data processing means capable of determining the conductivity coefficient k and/or the heat capacity C of the wall, on the basis of at least information provided by said sensors, in the absence of regulation of the temperature or of the heat flow on either one of the faces of the wall;

the device being **characterized in that** the third sensor ($A_{amb}$) is a temperature sensor capable of providing a measurement of the ambient temperature in the vicinity of the first face of the wall.

2. The device according to claim 1, not comprising any heat flow sensor.

3. The device according to claim 1 or 2, wherein the processing means determine the conductivity coefficient k and/or the heat capacity C, by calculating the time-dependent change of the temperatures in the wall during said time interval, and by retaining for the conductivity coefficient k and/or the heat capacity C, the value(s) for which, during said interval, the differences between the calculated temperature values ($\theta(0,t)$, $\theta(L,t)$) for the first and second faces and the temperatures ($\theta d1(t)$, $\theta d2(t)$) measured by the first and second sensors, respectively, are minimum.

4. The device according to any of claims 1 to 3, wherein the processing means are capable of determining the conductivity coefficient k and/or the heat capacity C only on the basis of the measurements of said first, second and third sensors, at least in an operating mode and/or at least in a final calculation phase.

5. The device according to claim 4, wherein the processing means are capable of executing:

- an initialization phase during which approximate values of the temperatures in the wall for said time interval are calculated;
- a calculation phase during which the conductivity coefficient k and/or the heat capacity C are calculated, the measurements acquired by said first, second and third sensors being used alone in this phase.

6. The device according to any of claims 1 to 5, wherein in order to determine the conductivity coefficient k and/or the heat capacity C, the processing means include

- a simulation module, capable of calculating the temperature values of the wall ($\theta(x,t)$) for said time interval, notably depending on the conductivity k and/or on the heat capacity (C) of the wall; and
- an adaptation module, capable of determining modified value(s) of at least one input variable of the simulation module, notably including the conductivity coefficient k and/or the heat capacity C, so as to reduce or minimize the differences between the temperature values ($\theta(0,t)$, $\theta(L,t)$) calculated for the first and second faces and the temperatures ($\theta d1(t)$, $\theta d2(t)$) measured by the first and second sensors, respectively.

7. The device according to claim 6, wherein the variables which the adaptation module is capable of modifying, comprise the conductivity (k) and/or the heat capacity (C) of the wall, and optionally one or several of the following parameters: surface heat flow of the second face ($\Phi L(t)$), initial temperature field $\theta i(x)$ in the wall, and heat exchange coefficient(s) ($\alpha 0$, $\alpha L$) relating the surface heat flow of the first and/or second face to the temperature inside or at the surface of the wall.

8. The device according to any of claims 1 to 7, further comprising a fourth sensor (Ae) capable of being positioned in the vicinity of said second face in order to provide approximate values of the temperature of the second face or of the surface flow ($\Phi L$) exchanged through said second face.

9. The device according to claim 8, wherein approximate values of the temperatures in the wall are notably calculated based on the temperature or the surface heat flow ($\Phi L$) measured by said fourth sensor.

10. The device according to any of claims 1 to 9, further including at least one heat source (32), capable of being positioned facing one face of said wall and of acting on the latter by convection or radiation, thereby modifying the surface heat flow ($\Phi L$) of said face.

11. A method for determining the conductivity k and/or the heat capacity C of a planar wall extending between a first (F0) and second (FL) face (x=0, x=L), the method including the following steps:

a) the following are positioned:

- on a first face of the wall, a first temperature sensor (A1) in order to acquire measurements of the temperature ($\theta d1(t)$) of said first face;
- on a second face of the wall, a second temperature sensor (A2), in order to acquire measurements of the temperature ($\theta d2(t)$) of said second face;
- a third temperature sensor ($A_{amb}$), for providing a measurement of the ambient temperature in the vicinity of the first face;

b) for a time interval, the temperatures of the first and second faces of the wall as well as the temperatures measured by the third sensor are periodically acquired without regulating the temperature or the surface heat flow on either of the faces of the wall; and then,
c) the conductivity coefficient k and/or the heat capacity C are determined on the basis of at least information provided by said sensors.

12. The method according to claim 11, according to which during step c), the temperatures in the wall are calculated for said time interval, notably from measurements provided by said third sensor during said time interval; and for the conductivity coefficient k and/or the heat capacity C, the value(s) is(are) retained for which during said interval, the differences between the calculated temperature values ($\theta(0,t)$, $\theta(L,t)$) for the first and second faces and the temperatures ($\theta d1(t)$, $\theta d2(t)$) measured by the first and second sensors, respectively, are minimum.

13. The method according to claim 11 or 12, wherein in step c), the conductivity coefficient k and/or the heat capacity C are only determined on the basis of the measurements of said first, second and third sensors.

14. The method according to claim 13, wherein step c) includes:

c1) an initialization phase during which approximate values of the temperatures in the wall for said interval are determined; and then
c2) a calculation phase during which the conductivity coefficient k and/or the heat capacity C are determined, the measurements acquired by said first, second and third sensors being used alone in this calculation.

15. The method according to any of claims 11 to 14, wherein, during said time interval, the first face of the wall is protected from heat radiations by a radiation-opaque screen.

16. The method according to any of claims 11 to 15, wherein, during said interval, the wall is not subject to the action of a controlled heat source.

17. The method according to any of claims 11 to 15, wherein, during at least one portion of said time interval and/or during a period preceding said interval, a controlled heat source is positioned facing one face of said wall for modifying the surface heat flow of said face.

18. The method according to any of claims 11 to 17, wherein, during at least one portion of said time interval, the surface heat flow on the second face of the wall is measured by means of a heat flow sensor.

FIG.1A

FIG.1C

FIG.1B

FIG.2

FIG.3

FIG.8

**FIG.4**

**FIG.5**

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MM.ZAWILSKI B M et al.** Dynamic measurement access, a new technique for fast thermal conductivity measurement. *REVIEW OF SCIENTIFIC INSTRUMENTS, AIP,* 01 Octobre 2001, vol. 72, 3937-3939